# EUROPÄISCHE PATENTSCHRIFT

(11) **EP 3 445 275 B1**
(45) Veröffentlichungstag und Bekanntmachung des Hinweises auf die Patenterteilung: **09.09.2020**
(21) Anmeldenummer: 17719522.9
(22) Anmeldetag: 12.04.2017
(51) Int. Cl.: A61C 13/15, A61C 13/00

(54) **VERFAHREN ZUR POLYMERISATION VON DENTALPOLYMERISATIONSKOMPOSITHARZ UND LICHTBESTRAHLUNGSVORRICHTUNG**
METHOD FOR POLYMERIZING DENTAL POLYMERIZATION COMPOSITE RESIN, AND LIGHT IRRADIATING DEVICE
PROCÉDÉ POUR LA POLYMÉRISATION DE RÉSINE DENTAIRE COMPOSITE DE POLYMÉRISATION ET DISPOSITIF D'IRRADIATION DE LUMIÈRE

(30) Priorität: 18.04.2016 DE 102016107122
(43) Veröffentlichungstag der Anmeldung: 27.02.2019
(73) Patentinhaber: Kulzer GmbH, 63450 Hanau (DE)
(72) Erfinder: KUBIAK-ESSMANN, Harald, 61130 Nidderau (DE); SCHMID, Stephan, 63695 Glauburg (DE); NIEDOBA, Patrick, 63773 Goldbach (DE); WEIGEL, Christian, 63538 Großkrotzenburg (DE)
(74) Vertreter: Schultheiss & Sterzel Patentanwälte PartG mbB
(86) Internationale Anmeldenummer: PCT/EP2017/058858
(87) Internationale Veröffentlichungsnummer: WO 2017/182375

(56) Entgegenhaltungen:
- WO-A1-2016/039332
- JP-A- 2003 033 374
- US-A1- 2006 033 052

## Beschreibung

Die Erfindung betrifft ein Verfahren zur Polymerisation und Härtung von Dentalpolymerisationskompositharz sowie eine Lichtbestrahlungsvorrichtung zur Umsetzung eines solchen Verfahrens. Das Verfahren und die Lichtbestrahlungsvorrichtung finden im Labor Einsatz, wo Dentalprothesen und kompletter Zahnersatz gefertigt werden.

Dentalphotopolymerisationskompositharze beziehungsweise kurz Dentalpolymerisationskompositharze finden in der Dentalmedizin breite Anwendung. Neben den guten physikalischen Eigenschaften sind diese Materialien auch deshalb besonders geeignet, da sie im Mund kein unangenehmes Gefühl im Vergleich zu natürlichen Zähnen verursachen und da ihre Farbe an den Farbton natürlicher Zähne angepasst werden kann, so dass auch die erforderlichen ästhetischen Eigenschaften erzielt werden können.

Zur Anwendung der Dentalpolymerisationskompositharze werden diese polymerisiert und gehärtet, nachdem beispielsweise Teile eines Zahnersatzes, wie Dentalprothesen oder Teile einer Dentalprothese, aus dem Dentalpolymerisationskompositharz geformt wurden. Die Polymerisation und Härtung, beziehungsweise Aushärtung, erfolgt üblicherweise über Licht mit Hilfe von sogenannten Polymerisationsgeräten, die geeignete Lichtbestrahlungsvorrichtungen enthalten.

Um derzeit gebräuchliche Dentalpolymerisationskompositharze einer Photopolymerisation zu unterziehen, wird am häufigsten eine Kombination von einem Campherchinon und einem tertiären Amin oder einem Acylphosphinoxid als Photopolymerisationskatalysator verwendet. Das Campherchinon hat eine optische Absorptionswellenlängenbande mit einem Maximum bei etwa 460 nm und einen Bereich von ca. 30 nm um das Maximum herum.

Halogenlampen strahlen Licht in einem breiten Lichtwellenlängenbereich zwischen 350 nm und 800 nm ab. Die nicht zur Photopolymerisation des Dentalpolymerisationskompositharzes geeigneten Wellenlängen des Lichts werden einfach ausgefiltert. Dadurch gehen bereits 90% der abgestrahlten Energie verloren. Darüber hinaus weisen Halogenlampen bei einem normalen Gebrauch eine verminderte Lichtmenge auf.

Um diese Nachteile zu überwinden wurde die Anwendung von Laserlicht mit hoher Intensität diskutiert (siehe hierzu beispielsweise das Patent US 6 282 012 B1). Ferner wurden erste Lichtbestrahlungsvorrichtungen mit LED als Leuchtmittel entwickelt. Dabei wird meist eine Vielzahl von Licht-emittierenden Dioden (LED) mit einem Emissionspeak im Bereich von 430 bis 480 nm eingesetzt (sogenannte blaue LED). Diese werden mit einer optischen Einrichtung zum Bündeln des Lichts der Dioden in den Lichtbestrahlungsvorrichtungen angewendet.

Lichtbestrahlungsvorrichtungen mit blauer LED und mit hoher Intensität weisen eine geringe Eindringtiefe in das Dentalpolymerisationskompositharz im Vergleich zu der Photopolymerisation mit Halogenlampen auf, wodurch im Inneren ein hoher nicht vollständig polymerisierter Anteil an Dentalpolymerisationskompositharz verbleibt. Dadurch kann es zu einer Beeinträchtigung der Materialeigenschaften des ausgehärteten Dentalpolymerisationskompositharzes kommen, so dass sich das aus dem Dentalpolymerisationskompositharz gefertigte Material bereits kurze Zeit nach der Polymerisation aus dem Zahnersatz lösen kann, beziehungsweise ein daraus gefertigter Zahnersatz nachteilige mechanische Eigenschaften aufweist. Ferner ist der Photopolymerisationsinitator ein Material, bei dem der entsprechende optische Wellenlängenbereich ein Absorptionsmaximum (beziehungsweise einen Peak) bei 380 nm aufweist, was sich von dem Campherchinon unterscheidet, bei dem der entsprechende Peak bei 470 nm liegt.

Um diesen Wellenlängenbereich zu erreichen, schlägt die WO 00/67 048 A2 eine Lichtbestrahlungsvorrichtung vor, die eine Leuchtdiodenlichtquelle umfasst, die in Form eines Arrays von Diodenelementen, wie z.B. Laserdioden oder Licht-emittierenden Dioden (LED), vorliegt. Das Diodenelement emittiert vorzugsweise entweder im blauen oder ultravioletten Bereich des optischen Spektrums. Die US 2006/0033052 A1 offenbart ein Stift zur Aushärtung von dentalen Werkstoffen, bei dem mit Hilfe einer blauen und einer ultravioletten LED das Abstrahlverhalten einer Halogenlampe simuliert wird. Die WO 2016/039332 A1 schlägt vor, drei verschiedene Lichtquellen zu verwenden und durch unterschiedlichen Betrieb der Lichtquellen eine Vorhärtung oder eine endgültige Härtung eines Kunststoffs zu bewirken. Aus der EP 1 336 389 B1 ist eine Lichtbestrahlungsvorrichtung bekannt, bei der sowohl eine blaue als auch eine ultraviolette LED betrieben werden kann. Derartige Lichtbestrahlungsvorrichtungen werden zur Aushärtung von Kunststofffüllungen verwendet, also direkt beim Zahnarzt eingesetzt.

Nachteilig ist bei bekannten Lichtbestrahlungsvorrichtungen mit LED und bei bekannten Verfahren zur Polymerisation und Härtung von Dentalpolymerisationskompositharzen, dass diese zwar zum Aushärten von Kunststofffüllungen geeignet sind, aber bei der Herstellung von Zahnersatz im Labormaßstab nur bedingt geeignet sind. Dabei ist es nachteilig, dass die Dentalpolymerisationskompositharze bei der Herstellung von Zahnersatz im Labormaßstab bei der Polymerisation und Härtung nicht vollständig aushärten und deswegen die Qualität der hergestellten Dentalprodukte verbesserungsfähig ist. Zudem ist es immer wünschenswert, die Dauer des Verfahrens beziehungsweise der Härtung des Dentalpolymerisationskompositharzes so kurz wie möglich zu gestalten. Die Stabilität und Farbe des Dentalpolymerisationskompositharzes soll dabei möglichst wenig beeinträchtigt werden.

Die Aufgabe der Erfindung besteht also darin, die Nachteile des Stands der Technik zu überwinden. Insbesondere soll ein Verfahren und eine Lichtbestrahlungsvorrichtung bereitgestellt werden, bei dem beziehungsweise bei der das Dentalpolymerisationskompositharz möglichst schnell, homogen und vollständig polymerisiert und ausgehärtet wird, ohne dabei die Färbung des Dentalpolymerisationskompositharzes zu beeinträchtigen. Die Lichtbestrahlungsvorrichtung und das Verfahren sollen zur Herstellung von Dentalprodukten und von Zahnersatz im Labormaßstab einsetzbar sein. Ferner soll eine Lichtbestrahlungsvorrichtung und ein Verfahren für unterschiedliche und variable Dentalphotopolymerisationskompositharze unter Verwendung einer Kombination aus Campherchinon und einem Photopolymerisationskatalysator entwickelt werden, mit der beziehungsweise mit dem die unterschiedlichen Dentalphotopolymerisationskompositharze mittels einer Lichtbestrahlung effizient und vollständig polymerisiert und gehärtet werden können.

Das Verfahren soll schnell und kostengünstig durchführbar sein und dabei den Energieverbrauch soweit wie möglich reduzieren. Bevorzugt soll das Verfahren und die Lichtbestrahlungsvorrichtung variabel einsetzbar sein und auch auf zukünftige Dentalphotopolymerisationskompositharze anwendbar sein, deren Zusammensetzung und deren Verhalten beim Polymerisieren und Härten derzeit noch nicht genau bekannt sind. Es soll möglichst auch in den tieferen inneren Bereichen des zu polymerisierenden und auszuhärtenden Dentalphotopolymerisationskompositharzes eine gleichmäßige und möglichst weitgehende Polymerisierung und Härtung erreichbar sein, damit der aus dem Dentalphotopolymerisationskompositharz hergestellte Zahnersatz möglichst stabil ist und homogene physikalische Eigenschaften aufweist.

Die der vorliegenden Erfindung zugrundeliegenden Aufgaben werden gelöst durch ein Verfahren zur Polymerisation und Härtung eines Dentalpolymerisationskompositharzes nach Anspruch 1 mit einer Lichtbestrahlungsvorrichtung, die Lichtbestrahlungsvorrichtung umfassend wenigstens eine blaue LED mit einem Emissionspeak bei einer Wellenlänge zwischen 430 nm und 490 nm und wenigstens eine ultraviolette oder UV-nahe LED mit einem Emissionspeak zwischen 350 nm und 420 nm, bei dem zuerst die wenigstens eine blaue LED ohne die wenigstens eine ultraviolette oder UV-nahe LED zugeschaltet und betrieben wird und später die wenigstens eine ultraviolette oder UV-nahe LED betrieben wird, so dass die wenigstens eine blaue LED und die wenigstens eine ultraviolette oder UV-nahe LED ab einem späteren Zeitpunkt zumindest zeitweise gleichzeitig betrieben werden, wobei die Leistung der wenigstens einen blauen LED und die Leistung der wenigstens einen ultravioletten oder UV-nahen LED in Abhängigkeit von der Zeit programmiert gesteuert werden und dabei das von der wenigstens einen blauen LED und der wenigstens einen ultravioletten oder UV-nahen LED der Lichtbestrahlungsvorrichtung abgestrahlte Licht auf das Dentalpolymerisationskompositharz gestrahlt wird, wobei das Dentalpolymerisationskompositharz dadurch polymerisiert und aushärtet.

Unter einem Emissionspeak wird hierbei ein lokales Maximum der emittierten elektromagnetischen Strahlung im zusammenhängenden sichtbaren und ultravioletten Wellenlängenbereich verstanden. Also beispielsweise im Bereich zwischen 300 nm und 750 nm.

Als LED werden erfindungsgemäß bevorzugt keine Laserdioden verwendet, da diese kostspieliger sind und aufwendiger gekühlt werden müssen.

Bei erfindungsgemäßen Verfahren kann vorgesehen sein, dass die programmierte Steuerung eine softwaremodulierte und/oder eine hardwaremodulierte Leistungssteuerung der wenigstens einen blauen LED und/oder der wenigstens einen ultravioletten oder UV-nahen LED bewirkt.

Hierdurch kann die Steuerung der zeitabhängigen Leistung der wenigstens einen blauen LED und der wenigstens einen ultravioletten oder UV-nahen LED leicht umgesetzt beziehungsweise realisiert werden. Bevorzugt wird dabei eine softwaremodulierte Leistungssteuerung, da diese durch eine Softwareaktualisierung leicht an zukünftige Aufgaben angepasst werden kann.

Bei einer hardwaremodulierten Leitungssteuerung werden die LEDs über Relais oder ähnliche Bauteile gesteuert zu- oder abgeschaltet, beispielsweise eine Leistungssteuerung über binäres Ein- oder Ausschalten einzelner LEDs, über eine Stufensteuerung oder eine Stufenhöhe in Abhängigkeit der Anzahl der LEDs die beschaltet werden.

Bei einer softwaremodulierten Leistungssteuerung wird die Versorgungsspannung und/oder der Stromfluss der LEDs variiert, wodurch sich eine beliebige stufenlose emittierte Leistungskurve oder Rampe (Dimmerprinzip) beziehungsweise Frequenz (Stroboskopprinzip) oder ähnliches darstellen lässt.

Des Weiteren kann vorgesehen sein, dass die wenigstens eine blaue LED und/oder die wenigstens eine ultraviolette oder UV-nahe LED zumindest zeitweise periodisch betrieben werden, wobei vorzugsweise die Frequenz programmiert gesteuert wird.

Hierdurch kann beispielsweise eine Pulsweitenmodulation erzeugt werden, mit der auf einfache Weise ein an das Dentalpolymerisationskompositharz angepasster Leistungseintrag erreicht werden kann.

Besonders bevorzugte erfindungsgemäße Verfahren können sich auch dadurch auszeichnen, dass die Leistung der wenigstens einen blauen LED und/oder der wenigstens einen ultravioletten oder UV-nahen LED in Abhängigkeit von der Zeit über wenigstens eine Leistungsrampe gesteuert erhöht und/oder reduziert wird, wobei bevorzugt die Leistung innerhalb einer Zeitspanne von wenigstens 1 Sekunde und höchstens 300 Sekunden von einer ersten Leistung auf eine zweite Leistung erhöht oder reduziert wird und/oder die wenigstens eine Leistungsrampe mit einem linearen, logarithmischen oder exponentiellen zeitlichen Verlauf gesteuert wird oder mit einem Zeitverlauf, der einer anderen mathematischen Funktion folgt.

Bei der Leistungsrampe wird erfindungsgemäß bevorzugt eine Rampe verwendet, bei der die Leistung innerhalb von zumindest 1 Sekunde und maximal 300 Sekunden erhöht oder reduziert wird. Durch die Leistungsrampen gelingt es, das Dentalpolymerisationskompositharz gleichmäßig beziehungsweise homogen auch in tieferen Bereichen zu polymerisieren und zu härten. Dies gilt insbesondere zu Beginn der Bestrahlung des Dentalpolymerisationskompositharzes mit dem Licht der blauen LED. Ganz besonders bevorzugt wird also die Leistung zu Beginn der Bestrahlung von Null auf eine erste Sollleistung gleichmäßig oder entsprechend einer bestimmten Funktion erhöht.

Mit einer Weiterbildung des erfindungsgemäßen Verfahrens und der im Folgenden beschriebenen erfindungsgemäßen Lichtbestrahlungsvorrichtung wird vorgeschlagen, dass das Programm zur zeitlichen Steuerung der Leistung der wenigstens einen blauen LED und/oder der wenigstens einen ultravioletten oder UV-nahen LED durch Bedienen eines Bedienelements der Lichtbestrahlungsvorrichtung oder einer Eingabeeinrichtung oder eines Computers, die oder der mit der Lichtbestrahlungsvorrichtung verbunden ist oder die oder der ein Teil der Lichtbestrahlungsvorrichtung ist, gestartet wird, insbesondere durch Bedienen eines Schalters, einer Taste, einer Tastatur, eines Drehgebers, eines Touchscreens, Voice-Control oder eines Hebels der Lichtbestrahlungsvorrichtung oder des Computers gestartet wird.

Als Computer kann auch ein Smartphone verwendet werden, welches über eine geeignete App Programme auswählen und starten kann. Über die App können bevorzugt auch neue Programme zur Steuerung der Leistung der wenigstens einen blauen LED und/oder der wenigstens einen ultravioletten oder UV-nahen LED in einem programmierbaren elektronischen Speicher der Lichtbestrahlungsvorrichtung gespeichert beziehungsweise geladen werden oder vorhandene Programme verändert oder gelöscht werden. Der Computer oder das Smartphone kann auch direkt zur Steuerung der Leistung der LED verwendet werden. Der Computer oder das Smartphone sind dann in diesem Fall als essentieller Teil der Lichtbestrahlungsvorrichtung aufzufassen, da sie zur Umsetzung der wesentlichen Teile des erfindungsgemäßen Verfahrens programmiert sind. Durch alle diese genannten Maßnahmen wird eine hohe Anwenderfreundlichkeit erreicht. Zudem bleibt die Lichtbestrahlungsvorrichtung auf diese Weise variabel.

Bevorzugt kann vorgesehen sein, dass zur Polymerisation und Härtung des Dentalpolymerisationskompositharzes ein Campherchinon und ein tertiäres Amin oder ein Acylophosphinoxid oder Diphenyl-2,4,6-trimethylbenzoyl-phosphine-oxide (TPO) oder 1-Phenylpropane-1,2-dione (PPD) als Photopolymerisationskatalysator des Dentalpolymerisationskompositharzes verwendet wird. Die Photoinitiatoren TPO (Diphenyl-2,4,6-trimethylbenzoyl-phosphine-oxide) und PPD (1-Phenylpropane-1,2-dione) haben ein Absorptionsmaximum bei ca. 380 nm mit einer Breite der Absorptionsbande von ca. 30 nm. Diese Wellenlängenbande ist sichtbares Licht im blauen sowie unsichtbares Licht im nahen ultravioletten sowie ultravioletten Bereich.

Diese Chemikalien sind zur Anwendung in derzeit gebräuchlichen Dentalpolymerisationskompositharzen besonders gut geeignet.

Um eine Anpassung an unterschiedliche Dentalpolymerisationskompositharze zu ermöglichen kann vorgesehen sein, dass eine Mehrzahl von unterschiedlichen Programmen für die zeitliche Leistungssteuerung der wenigstens einen blauen LED und der wenigstens einen ultravioletten oder UV-nahen LED in der Lichtbestrahlungsvorrichtung hinterlegt oder gespeichert sind und eine Auswahl eines Programms durch eine Eingabe, durch ein Bedienen eines Bedienelements, durch einen Scan eines Codes oder eines Labels und/oder durch eine Messung mit wenigstens einem Sensor erfolgt, wobei vorzugsweise die Messung mit wenigstens einem Sensor durch eine Analyse des Dentalpolymerisationskompositharzes oder zumindest einer seiner Komponenten erfolgt.

Hierdurch ist das Verfahren besonders variabel und zur Polymerisierung und Härtung unterschiedlicher Dentalpolymerisationskompositharze geeignet. Mit dem Verfahren können dann ohne weiteres viele verschiedene unterschiedliche Dentalpolymerisationskompositharze polymerisiert und ausgehärtet werden.

Es kann auch vorgesehen sein, dass die Leistung der wenigstens einen blauen LED und/oder der wenigstens einen ultravioletten oder UV-nahen LED mit einer programmierten Pulsweitenmodulation gesteuert wird.

Hiermit kann der Eintrag der Leistung beziehungsweise der Lichtmenge in das Dentalpolymerisationskompositharz besonders einfach gesteuert und eingestellt werden.

Gemäß einer besonders bevorzugten Weiterbildung der Erfindung kann vorgesehen sein, dass die Leistung der wenigstens einen blauen LED und die Leistung der wenigstens einen ultravioletten oder UV-nahen LED in Abhängigkeit von der Zeit derart programmiert gesteuert werden, dass der Betrieb der wenigstens einen blauen LED zuerst beginnt und der Betrieb der wenigstens einen ultravioletten oder UV-nahen LED danach beginnt und der Betrieb der wenigstens einen blauen LED vor oder gleichzeitig mit dem Betrieb der wenigstens einen ultravioletten oder UV-nahen LED beendet wird.

Hiermit wird die Härtung des Dentalpolymerisationskompositharzes weiter optimiert.

Ferner kann vorgesehen sein, dass die Lichtbestrahlungsvorrichtung zumindest einen Lüfter zur Luft-Kühlung der LED aufweist, vorzugsweise einen Lüfter zur Luft-Kühlung der wenigstens einen blauen LED aufweist und einen Lüfter zur Luft-Kühlung der wenigstens einen ultravioletten oder UV-nahen LED aufweist, wobei der zumindest eine Lüfter von zumindest einem Motor angetrieben wird, der analog zur Steuerung der Leistung der wenigstens einen blauen LED und/oder der wenigstens einen ultravioletten oder UV-nahen LED programmiert gesteuert wird.

Hiermit kann eine gezielte Wärmeabfuhr der LED bei deren Betrieb erfolgen und somit die Lärmbelästigung und der Energieverbrauch reduziert werden. Zudem kann der Anwender an dem Geräusch des Lüfters akustisch erkennen, welches Programm abläuft und in welchem Stadium des Programms er sich befindet.

Es kann auch vorgesehen sein, dass die Lichtbestrahlungsvorrichtung einen Motor zum Drehen eines Drehtellers aufweist, wobei der Drehteller im Abstrahlungsbereich der Lichtbestrahlungsvorrichtung angeordnet ist und das Dentalpolymerisationskompositharz auf dem Drehteller angeordnet wird, um es auszuhärten, und wobei vorzugsweise der Motor zum Drehen eines Drehtellers programmiert gesteuert wird.

Auf dem Drehteller kann der zu fertigende Zahnersatz beziehungsweise das Dentalpolymerisationskompositharz platziert werden, um ihn beziehungsweise es im Licht der Lichtbestrahlungsvorrichtung auszuhärten. Hierdurch kann eine homogenere und gleichmäßigere Lichteinstrahlung in das auszuhärtende Dentalpolymerisationskompositharz erreicht werden.

Es wird des Weiteren erfindungsgemäß vorgeschlagen, dass bei der programmierten Steuerung der Leistung der wenigstens einen blauen LED und/oder der wenigstens einen ultravioletten oder UV-nahen LED zumindest zwei unterschiedliche Sollleistungen größer als 0 Watt eingestellt werden. Bevorzugt werden die zumindest zwei Sollleistungen wenigstens eine Sekunde gehalten, besonders bevorzugt zwischen einer und 300 Sekunden beziehungsweise maximal bis Programmende gehalten.

Auf diese Weise wird eine Verbesserung bei der Polymerisierung und Härtung dadurch erreicht, dass im Laufe der Polymerisierung und Härtung während des Programms die Leistung der wenigstens einen blauen LED und/oder der wenigstens einen ultravioletten oder UV-nahen LED an die fortschreitende Polymerisierung und Härtung angepasst wird, so dass eine Verbesserung der Homogenität des erzeugten Materials und eine Optimierung des Verfahrens bezüglich Zeitaufwand und Energieverbrauch möglich wird.

Es kann des Weiteren vorgesehen sein, dass zumindest ein Teil des Lichts der wenigstens einen blauen LED und/oder der wenigstens einen ultravioletten oder UV-nahen LED, das nicht direkt auf das Dentalpolymerisationskompositharz trifft mit Hilfe von einem Reflektor oder mit Hilfe einer Mehrzahl von Reflektoren auf das Dentalpolymerisationskompositharz gestrahlt wird.

Hierdurch kann der Anteil der effektiv genutzten Lichtmenge, die von den LED erzeugt wird, erhöht werden. Zudem wird durch die Einstrahlung des Lichts von unterschiedlichen Richtungen ein gleichmäßigerer und gegebenenfalls tieferer Eintrag des Lichts in das auszuhärtende Dentalpolymerisationskompositharz erreicht.

Mit einer Weiterbildung des erfindungsgemäßen Verfahrens wird vorgeschlagen, dass die Lichtbestrahlungsvorrichtung eine Abstrahlöffnung zum Abstrahlen des Lichts der wenigstens einen blauen LED und der wenigstens einen ultravioletten oder UV-nahen LED mit einer Fläche von wenigstens 10 cm², vorzugweise 100 cm² aufweist. Unter einer Abstrahlöffnung wird erfindungsgemäß auch eine Summe mehrerer Abstrahlöffnungen verstanden.

Auch hierdurch wird eine gleichmäßigere Bestrahlung des auszuhärtenden Dentalpolymerisationskompositharzes erreicht und zudem der Einsatz für größeren Zahnersatz, wie beispielweise einer Voll-Prothese, oder auch für eine gleichzeitige Aushärtung mehrerer Zahnprothesen ermöglicht.

Es kann erfindungsgemäß auch vorgesehen sein, dass das Dentalpolymerisationskompositharz auf einem Trägerelement angeordnet wird und das auf dem Trägerelement befindliche Dentalpolymerisationskompositharz mit der Lichtbestrahlungsvorrichtung bestrahlt wird, wobei vorzugsweise als Trägerelement ein Dentalmodell oder ein Gerüst verwendet wird.

Mit Hilfe des Trägerelements kann das Dentalpolymerisationskompositharz zum Aushärten zum einen in die gewünschte Form und zum anderen in eine besonders gut geeignete Position innerhalb der Lichtbestrahlungsvorrichtung gebracht werden.

Erfindungsgemäß ist vorgesehen, dass zuerst die wenigstens eine blaue LED ohne die wenigstens eine ultraviolette oder UV-nahe LED betrieben wird und später die wenigstens eine ultraviolette oder UV-nahe LED zugeschaltet wird, so dass die wenigstens eine blaue LED und die wenigstens eine ultraviolette oder UV-nahe LED ab einem späteren Zeitpunkt zumindest zeitweise gleichzeitig betrieben werden.

Hierdurch wird erreicht, dass die Zeit, die zum Aushärten des Dentalpolymerisationskompositharzes notwendige ist, möglichst kurz ist. Zunächst wird das Licht der blauen LED verwendet, um die tieferen Bereiche des Dentalpolymerisationskompositharzes zu erreichen und später die äußeren Bereiche mit der ultravioletten oder UV-nahen LED schnell ausgehärtet.

Die der vorliegenden Erfindung zugrundeliegenden Aufgaben werden auch gelöst durch eine Lichtbestrahlungsvorrichtung zur Polymerisation und Härtung eines Dentalpolymerisationskompositharzes, die Lichtbestrahlungsvorrichtung aufweisend wenigstens eine blaue LED mit einem Emissionspeak bei einer Wellenlänge zwischen 430 nm und 490 nm und wenigstens eine ultraviolette oder UV-nahe LED mit einem Emissionspeak zwischen 350 nm und 420 nm und eine Steuerung zur zeitlichen Leistungssteuerung der wenigstens einen blauen LED und zur zeitlichen Leistungssteuerung der wenigstens einen ultravioletten oder UV-nahen LED unabhängig voneinander, wobei die Steuerung zur Umsetzung eines erfindungsgemäßen Verfahrens eingerichtet ist, insbesondere programmiert ist.

Die wenigstens eine ultraviolette oder UV-nahe LED arbeitet bevorzugt im nahultravioletten Wellenlängen-Bereich.

Bei erfindungsgemäßen Verfahren kann vorgesehen sein, dass die Lichtbestrahlungsvorrichtung zumindest zwei blaue LED mit einem Emissionspeak bei einer Wellenlänge zwischen 430 nm und 490 nm aufweist und die Lichtbestrahlungsvorrichtung wenigstens doppelt so viele der zumindest zwei blauen LED wie der wenigstens einen ultravioletten oder UV-nahen LED aufweist, bevorzugt wenigstens viermal so viele der zumindest zwei blauen LED wie der wenigstens einen ultravioletten oder UV-nahen LED aufweist.

Hiermit wird erreicht, dass die Intensität des blauen Lichts der blauen LED besonders hoch eingestellt werden kann, die für die Polymerisation und Härtung der tieferen Bereiche des Dentalpolymerisationskompositharzes wichtig sind. Dadurch kann auch bei starker Streuung auch in weiter innen beziehungsweise tiefer liegenden Bereichen noch eine Polymerisation initiiert werden.

Des Weiteren kann vorgesehen sein, dass die wenigstens eine blaue LED als mehrere Gruppen von zwei bis zwanzig in Reihe geschalteten blauen LED aufgebaut sind und die wenigstens eine ultraviolette oder UV-nahe LED als zumindest eine Gruppe von zwei bis zwanzig in Reihe geschalteten ultravioletten oder UV-nahen LED aufgebaut sind. Selbstverständlich erfordert dies, dass die Lichtbestrahlungsvorrichtung zumindest zwei blaue LED und zumindest zwei ultraviolette oder UV-nahe LED aufweist.

Mit diesem Aufbau lassen sich ausreichend hohe Intensitäten des blauen und ultravioletten Lichts erreichen. Zudem kann die Intensität der LED durch Zuschaltung beziehungsweise Abschaltung von ganzen Gruppen leicht gesteuert werden und dabei die LED bei voller Leistung und damit höchstem Wirkungsgrad betrieben werden.

Der Erfindung liegt die überraschende Erkenntnis zugrunde, dass es durch die programmierte Steuerung der Leistung der wenigstens einen blauen LED und der wenigstens einen ultravioletten oder UV-nahen LED gelingt, eine Optimierung der Polymerisierung und Härtung des Dentalpolymerisationskompositharzes zu erreichen, so dass auch in größeren Tiefen eine homogene und ausreichende Polymerisation und Härtung des erzeugten Materials zu erreichen ist. Gleichzeitig ist das Verfahren zeiteffizient beziehungsweise zeitsparend und kosteneffizient und energieeffizient umsetzbar. Durch die Variabilität des erfindungsgemäßen Verfahrens und der erfindungsgemäßen Vorrichtung ist es zudem möglich, das Verfahren und die Vorrichtung an unterschiedliche und auch in Zukunft neu entwickelte Dentalpolymerisationskompositharze anzupassen und für diese eine Optimierung der Polymerisation und Härtung zu erreichen.

Es wurden im Rahmen der vorliegenden Erfindung überraschend der physikalische Hintergrund gefunden, dass bei einigen Dentalpolymerisationskompositharzen das Licht der wenigstens einen ultravioletten oder UV-nahen LED stärker streut, so dass die tiefer beziehungsweise weiter innen liegenden Bereiche des auszuhärtenden Dentalpolymerisationskompositharzes weniger stark und schnell polymerisieren und härten und dass dieses Prinzip auf die Vorgänge beim Härten von Dentalpolymerisationskompositharzen zur Herstellung von Zahnersatz anwendbar sind. Daher wird durch die erfindungsgemäße Abfolge der Bestrahlung erreicht, dass zunächst die tiefer beziehungsweise weiter innen liegenden Bereiche des auszuhärtenden Dentalpolymerisationskompositharzes mit Hilfe des blauen Lichts der wenigstens einen blauen LED polymerisiert und gehärtet werden und anschließend eine stärkere und schnellere Härtung mit Hilfe der wenigstens einen ultravioletten oder UV-nahen LED erfolgt. So kann eine auch in der Tiefe gleichmäßige und homogene Härtung und Polymerisierung des Dentalpolymerisationskompositharzes erreicht werden. Das erzeugte Material ist dann stabiler und die mit dem Material erzeugte Verbindung haltbarer, als ohne die erfindungsgemäße Maßnahme.

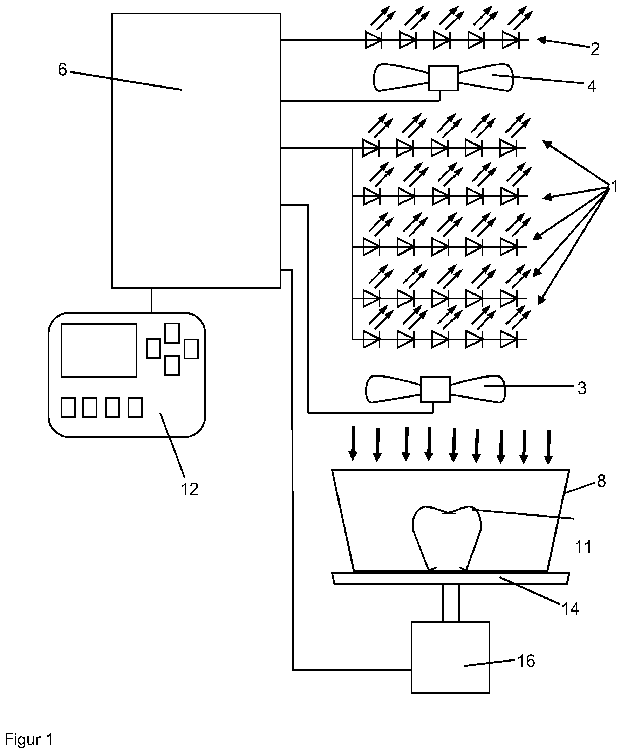

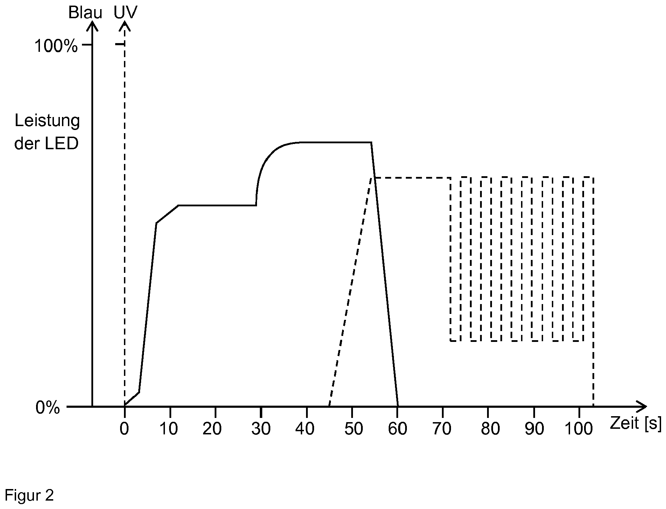

Im Folgenden werden Ausführungsbeispiele der Erfindung anhand einer schematisch dargestellten Figur und einem Leistungs-Zeit-Diagramm erläutert, ohne jedoch dabei die Erfindung zu beschränken. Dabei zeigt Figur 1 eine schematische Darstellung einer erfindungsgemäßen Lichtbestrahlungsvorrichtung und das Leistungs-Zeit-Diagramm nach Figur 2 eine erfindungsgemäße Leistungssteuerung der blauen und ultravioletten oder UV-nahen LED, gemäß einem erfindungsgemäßen Verfahren.

Die Lichtbestrahlungsvorrichtung weist fünf Gruppen von jeweils fünf blauen LED 1 auf, deren Strahlung einen Emissionspeak bei einer Wellenlänge zwischen 430 nm und 490 nm aufweist. Die fünf Gruppen der blauen LED 1 lassen sich vorzugsweise gruppenweise zuschalten und abschalten, um die Leistung der blauen LED 1 einzustellen.

Es können alternativ und im Rahmen der Erfindung auch zwei bis fünf Gruppen mit jeweils zwei bis fünf blauen LED verwendet werden oder auch eine einzelne Gruppe oder auch nur eine einzelne blaue LED.

Zusätzlich weist die Lichtbestrahlungsvorrichtung eine Gruppe aus fünf nahultravioletten LED 2 auf, deren Strahlung einen Emissionspeak zwischen 350 nm und 420 nm aufweist. Auch dies ist nur ein Beispiel und es können auch mehr oder weniger nahultraviolette oder auch UV-LED verwendet werden. Die nahultravioletten LED 2 und die blauen LED 1 können jeweils mit einem separaten Lüfter 3, 4 gekühlt werden. Die Lüfter 3, 4 werden mit Hilfe von Motoren angetrieben. Es ist auch möglich alle LED 1, 2 mit nur einem einzigen Lüfter 3 zu kühlen. Die Kühlung erfolgt durch einen Luftstrom, der die LED 1, 2 umspült. Alternativ ist auch eine Kühlung mit einem flüssigen Kühlmittel und/oder eine Kühlung mit Hilfe von Peltier-Elementen möglich.

Die LED 1, 2 und die Lüfter 3, 4 beziehungsweise die Motoren der Lüfter 3, 4 sind über einen Microcontroller 6, wie beispielsweise eine speicherprogrammierbare Steuerung (SPS) separat ansteuerbar. In einem Reflektortopf 8, der ein auszuhärtendes Dentalpolymerisationskompositharz 11 enthält wird der zu fertigende Zahnersatz mit Hilfe der Bestrahlung durch die LED 1, 2 ausgehärtet. Der Reflektortopf 8 ist auf der Innenseite mit Reflektoren bestückt, die das von den LED 1, 2 abgestrahlte Licht reflektieren und so allseitig auf den zu erzeugenden Zahnersatz beziehungsweise das Dentalpolymerisationskompositharz 11 strahlen. Um die Gleichmäßigkeit weiter zu verbessern ist der Reflektortopf 8 auf einem Drehteller 14 angeordnet, der von einem Motor 16 angetrieben wird. Der Motor 16 zum Drehen des Drehtellers 14 wird von dem Microcontroller 6 gesteuert. Der Microcontroller 6 ist dazu in der Lage, die LED 1, 2 und die Lüfter 3, 4 sowie den Motor 16 mit z.B. einer Phasenweitenmodulation (PWM) anzusteuern.

Die Lichtbestrahlungsvorrichtung ist erfindungsgemäß zur optimierten Polymerisierung und Härtung unterschiedlicher Dentalpolymerisationskompositharze 11 geeignet. Hierzu sind in dem Microcontroller 6 mehrere Programmabläufe gespeichert, über die die Leistung der blauen LED 1 und die Leistung der nahultravioletten LED 2 sowie die Drehzahl der Motoren der Lüfter 3, 4 und die Drehzahl des Motors 16 zur Drehung des Drehtellers 14 zeitlich gesteuert werden kann. Die Auswahl des Programms kann beispielsweise über einen Computer 12 oder eine Eingabeeinrichtung 12 erfolgen. Es ist auch möglich, dass mit dem Computer 12 ein Strichcode auf einer Verpackung des zu polymerisierenden und auszuhärtenden Dentalpolymerisationskompositharzes 11 eingelesen wird und der Computer 12 automatisch das zu dem an dem Strichcode erkannten Dentalpolymerisationskompositharz 11 passende Programm zur Polymerisierung und Härtung desselben auswählt. Es ist auch möglich die Art des Dentalpolymerisationskompositharzes 11 mit Hilfe von Sensoren zu ermitteln, die an dem Computer 12 angeschlossen sind und abhängig von der Auswertung das geeignete Programm in dem Microcontroller 6 zu starten. Der Computer 12 beziehungsweise die Eingabeeinrichtung 12 kann über ein Kabel, Netzwerk oder eine drahtlose Verbindung, wie zum Beispiel Ethernet, WLAN, Bluetooth, USB, mit dem Microcontroller 6 verbunden sein, so dass die Information zur Eingabe beziehungsweise zur Auswahl des Programms darüber an einen Eingang des Microcontrollers 6 geleitet wird und das gewünschte Programm zur Steuerung der LED 1, 2 in dem Microcontroller 6 ausgewählt wird. Der Microcontroller 6 startet dann das ausgewählte Programm, wobei auch hierzu ein Start-Befehl der Eingabeeinrichtung 12 beziehungsweise des Computers 12 abgewartet werden kann.

Das Programm kann aber auch zusätzlich oder alternativ in Abhängigkeit von der Stärke beziehungsweise den geometrischen Abmessungen des zu polymerisierenden und auszuhärtenden Dentalpolymerisationskompositharzes 11 ausgewählt werden.

Die Programme, die in dem Microcontroller 6 zur zeitlichen Leistungsteuerung der LED 1, 2 gespeichert sind, unterscheiden sich insbesondere dadurch, dass sie die Leistung der blauen LED 1 und der nahultravioletten LED 2 in Abhängigkeit von der Zeit steuern. Dabei werden die blauen LED 1 und die nahultravioletten LED 2 unterschiedlich betrieben. Insbesondere sind in den Programmen Rampen hinterlegt, mit denen die Leistung der blauen LED 1 und der nahultravioletten LED 2 in Abhängigkeit von der Zeit erhöht und/oder verringert werden.

Erfindungsgemäß bevorzugt werden zuerst die blauen LED 1 betrieben, um zunächst die tiefer im Dentalpolymerisationskompositharz 11 liegenden Bereiche mit Hilfe des blauen Lichts zu polymerisieren und zu härten. Anschließend werden mit Hilfe der nahultravioletten LED 2 die näher an der Oberfläche liegenden Bereiche des Dentalpolymerisationskompositharzes 11 bestrahlt und dadurch polymerisiert und gehärtet.

Durch diese Programmierungen ergibt sich die Möglichkeit, das Dentalpolymerisationskompositharz 11 in Abhängigkeit von dessen Zusammensetzung und/oder dessen geometrischen Abmessungen optimiert zu härten.

Ein beispielhafter zeitlicher Verlauf der Leistung einer Gruppe blauer LED 1 und einer Gruppe ultravioletter (UV) LED 2, die gemäß einem erfindungsgemäßen Verfahren betrieben werden, ist in Figur 2 als Leistung-Zeit-Diagramm dargestellt. Die Leistungsachsen der blauen LED 1 und der UV LED 2 sind linear und verlaufen von 0% bis zu 100% der maximalen Leistung der LED 1, 2. Die Leistungsachse der blauen LED 1 und der Kurvenverlauf der blauen LED 1 sind in Figur 2 durch durchgezogene Linien dargestellt, während die gestrichelte Leistungsachse und die gestrichelte Leistungskurve sich auf die UV LED 2 beziehen, die gestrichelte Kurve also den zeitlichen Verlauf der Leistung der UV LED 2 darstellt.

Zunächst wird die Leistung der blauen LED 1 (in Figur 2 als durchgezogene Linie dargestellt) mit einer Rampe, die drei unterschiedliche lineare Leistungsanstiege aufweist, auf eine erste Leistung (Sollleistung) gebracht und dort mit dieser ersten Leistung für etwa 18 Sekunden betrieben. In dieser Zeit kann das blaue Licht der blauen LED 1 auch in die tiefen Bereiche des Dentalpolymerisationskompositharzes 11 eindringen und dort die gewünschte Polymerisierung und Härtung des Dentalpolymerisationskompositharzes 11 initiieren.

Anschließend wird die Leistung der blauen LED 1 nochmals mit Hilfe einer umgekehrt exponentiellen Rampe auf eine zweite Leistung (Sollleistung) erhöht und dort nochmals für ungefähr 15 Sekunden gehalten. Durch diesen zweiten Leistungsanstieg kann die beginnende Polymerisierung etwas beschleunigt werden. Während dessen wird die Leistung die UV LED 2 entlang einer linearen Rampe erhöht. Bei Erreichen der ersten Soll-Leistung der UV LED 2 wird die Leistung der blauen LED 1 mit einer linearen Rampe auf Null reduziert. Es ergibt sich also ein kurzer zeitlicher Überlapp, bei dem sowohl die blauen LED 1 als auch die UV LED 2 gleichzeitig betrieben werden. Die blauen LED 1 werden erfindungsgemäß bevorzugt zuerst betrieben, weil das UV-Licht der UV LED 2 stärker an der Materialoberfläche des Dentalpolymerisationskompositharzes 11 streut und diese dadurch aushärtet und polymerisiert. Nach der Härtung und Polymerisierung des Dentalpolymerisationskompositharzes 11 ist dieses aber für die Strahlung der UV LED 2 und auch der blauen LED 1 weniger transparent, so dass die Strahlung nicht mehr so tief in das Dentalpolymerisationskompositharz 11 vordringen kann. Da das blaue Licht der blauen LED 1 eine größere Eindringtiefe aufgrund geringerer Streuung aufweist, kann durch die angegebene erfindungsgemäße Reihenfolge eine schnellere beziehungsweise weitergehende Härtung und Polymerisierung auch in größeren Tiefen des Dentalpolymerisationskompositharzes 11 erreicht werden. Die Bereiche an der Oberfläche können anschließend schnell und effizient mit Hilfe der UV LED 2 ausgehärtet werden.

Die Leistung der UV LED 2 wird auf der ersten Soll-Leistung für etwa 19 Sekunden gehalten und anschließend werden die UV LED 2 etwa 32 Sekunden mit einer Pulsweitenmodulation betrieben, bei der die Leistung der UV LED 2 zwischen der ersten Soll-Leistung und einer niedrigeren zweiten Soll-Leistung bei gleichmäßiger Frequenz betrieben wird.

In dem Microcontroller 6 sind eine Mehrzahl unterschiedlicher Programme zur Steuerung der Leistung über die Zeit für die blauen LED 1 und die UV LED 2 gespeichert. Mit Hilfe des Computers 12 beziehungsweise der Eingabeeinrichtung 12 lassen sich die Programme auswählen oder durchführen. Die Programme unterscheiden sich bevorzugt durch die Dauer der Leistungsstufen, die Frequenz der Pulsweitenmodulation, die Steigung und die Form der Rampen bei Leistungsanstiegen und Leistungsreduktionen sowie durch die Leistung der Leistungsstufen und Soll-Leistungen der blauen LED 1 und der UV LED 2. Die Programme sind dabei auf das zu polymerisierende und auszuhärtende Dentalpolymerisationskompositharz 11 abgestimmt und können auch von der geometrischen Form des auszuhärtenden Materials abhängig sein.

Die geeigneten Programmverläufe können empirisch bestimmt werden, indem das jeweilige Dentalpolymerisationskompositharz 11 mit einem bestimmten Test-Programm polymerisiert und ausgehärtet wird und anschließend die Härte des Materials und insbesondere auch die Aushärtetiefe bestimmt werden, also die Tiefe bis in die das Dentalpolymerisationskompositharz 11 bis zu einem bestimmten Grad polymerisiert und ausgehärtet ist. Durch Vergleich dieser Messergebnisse bezüglich Härte und/oder Aushärtetiefe bei unterschiedlichen Test-Programmen kann das am besten geeignete Test-Programm für das jeweilige Dentalpolymerisationskompositharz 11 gefunden werden und in der SPS 6 hinterlegt werden. Das Programm ist dann beispielsweise über eine eindeutige Kennung über den Computer 12 beziehungsweise die Eingabeeinrichtung 12 auswählbar.

Es kann auch ein frei programmierbarer Microcontroller 6 verwendet werden, der es ermöglicht ein eigenes Programm zu definieren. Dazu können baukastenartig Programmmodule in einem Speicher hinterlegt sein, die ausgewählt und aneinander gesetzt werden können, um eigene Programme zu erstellen. Als Programmmodule kommen beispielsweise Rampen, Steigungen, Zeitschritte, Ausblenden, Blitzen, Nachhärten oder Kühlen in Frage.

Neben rein empirischer Herangehensweise zum Bestimmen geeigneter Programme können auch gezielte Anpassungen vorgesehen sein. So erfordern dickere beziehungsweise tiefere geometrische Strukturen einen größeren Blauanteil der Strahlung, da die blaue Strahlung tiefer in das Material eindringt. Wenn ein Dentalpolymerisationskompositharz 11 mit einer größeren Menge beziehungsweise einer höheren Dichte von streuenden Partikeln, die das ästhetische Aussehen des Dentalpolymerisationskompositharzes 11 beeinflussen, verwendet wird, kann das UV-Licht ab einem späteren Zeitpunkt eingestrahlt werden, um dem blauen Licht zuvor für längere Zeit die Möglichkeit zu geben, die tiefer liegenden Bereiche des Dentalpolymerisationskompositharzes 11 zu erreichen. Zudem kann dann die Leistung reduziert werden, um den tieferen Bereichen mehr Zeit zur Polymerisierung und Härtung zu geben.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Blaue LED
- 2: Ultraviolette oder UV-nahe LED
- 3: Lüfter
- 4: Lüfter
- 6: Microcontroller
- 8: Reflektortopf mit Dentalpolymerisationskompositharz
- 11: Zahnersatz / Dentalpolymerisationskompositharz
- 12: Eingabeeinrichtung / Computer
- 14: Drehteller
- 16: Motor

## Patentansprüche

1. Verfahren zur Polymerisation und Härtung eines Dentalpolymerisationskompositharzes (11) mit einer Lichtbestrahlungsvorrichtung, die Lichtbestrahlungsvorrichtung umfassend wenigstens eine blaue LED (1) mit einem Emissionspeak bei einer Wellenlänge zwischen 430 nm und 490 nm und wenigstens eine ultraviolette oder UV-nahe LED (2) mit einem Emissionspeak zwischen 350 nm und 420 nm, **dadurch gekennzeichnet, dass**
zuerst die wenigstens eine blaue LED (1) ohne die wenigstens eine ultraviolette oder UV-nahe LED (2) betrieben wird und später die wenigstens eine ultraviolette oder UV-nahe LED (2) zugeschaltet und betrieben wird, so dass die wenigstens eine blaue LED (1) und die wenigstens eine ultraviolette oder UV-nahe LED (2) ab einem späteren Zeitpunkt zumindest zeitweise gleichzeitig betrieben werden, wobei die Leistung der wenigstens einen blauen LED (1) und die Leistung der wenigstens einen ultravioletten oder UV-nahen LED (2) in Abhängigkeit von der Zeit programmiert gesteuert werden und dabei das von der wenigstens einen blauen LED (1) und der wenigstens einen ultravioletten oder UV-nahen LED (2) der Lichtbestrahlungsvorrichtung abgestrahlte Licht auf das Dentalpolymerisationskompositharz (11) gestrahlt wird, wobei das Dentalpolymerisationskompositharz (11) dadurch polymerisiert und aushärtet.

2. Verfahren nach Anspruch 1, **dadurch gekennzeichnet, dass**
die programmierte Steuerung eine softwaremodulierte und/oder eine hardwaremodulierte Leistungssteuerung der wenigstens einen blauen LED (1) und/oder der wenigstens einen ultravioletten oder UV-nahen LED (2) bewirkt.

3. Verfahren nach Anspruch 1 oder 2, **dadurch gekennzeichnet, dass**
die wenigstens eine blaue LED (1) und/oder die wenigstens eine ultraviolette oder UV-nahe LED (2) zumindest zeitweise periodisch betrieben werden, wobei vorzugsweise die Frequenz programmiert gesteuert wird.

4. Verfahren nach einem der vorangehenden Ansprüche, **dadurch gekennzeichnet, dass** die Leistung der wenigstens einen blauen LED (1) und/oder der wenigstens einen ultravioletten oder UV-nahen LED (2) in Abhängigkeit von der Zeit über wenigstens eine Leistungsrampe gesteuert erhöht und/oder reduziert wird, wobei bevorzugt die Leistung innerhalb einer Zeitspanne von wenigstens 1 Sekunde und höchstens 300 Sekunden von einer ersten Leistung auf eine zweite Leistung erhöht oder reduziert wird und/oder die wenigstens eine Leistungsrampe mit einem linearen, logarithmischen oder exponentiellen zeitlichen Verlauf gesteuert wird oder mit einem Zeitverlauf, der einer anderen mathematischen Funktion folgt.

5. Verfahren nach einem der vorangehenden Ansprüche, **dadurch gekennzeichnet, dass** das Programm zur zeitlichen Steuerung der Leistung der wenigstens einen blauen LED (1) und/oder der wenigstens einen ultravioletten oder UV-nahen LED (2) durch Bedienen eines Bedienelements (12) der Lichtbestrahlungsvorrichtung oder einer Eingabeeinrichtung oder eines Computers (12), die oder der mit der Lichtbestrahlungsvorrichtung verbunden ist oder die oder der ein Teil der Lichtbestrahlungsvorrichtung ist, gestartet wird, insbesondere durch Bedienen eines Schalters, einer Taste, eines Drehgebers, einer Tastatur, einer Voice-Control, eines Touchscreens oder eines Hebels der Lichtbestrahlungsvorrichtung oder des Computers (12) gestartet wird.

6. Verfahren nach einem der vorangehenden Ansprüche, **dadurch gekennzeichnet, dass** zur Polymerisation und Härtung des Dentalpolymerisationskompositharzes (11) ein Campherchinon und ein tertiäres Amin oder ein Acylophosphinoxid oder Diphenyl-2,4,6-trimethylbenzoyl-phosphine-oxide (TPO) oder 1-Phenylpropane-1,2-dione (PPD) als Photopolymerisationskatalysator des Dentalpolymerisationskompositharzes (11) verwendet wird.

7. Verfahren nach einem der vorangehenden Ansprüche, **dadurch gekennzeichnet, dass** eine Mehrzahl von unterschiedlichen Programmen für die zeitliche Leistungssteuerung der wenigstens einen blauen LED (1) und der wenigstens einen ultravioletten oder UV-nahen LED (2) in der Lichtbestrahlungsvorrichtung hinterlegt oder gespeichert sind und eine Auswahl eines Programms durch eine Eingabe, durch ein Bedienen eines Bedienelements (12), durch einen Scan eines Codes oder eines Labels und/oder durch eine Messung mit wenigstens einem Sensor erfolgt, wobei vorzugsweise die Messung mit wenigstens einem Sensor durch eine Analyse des Dentalpolymerisationskompositharzes (11) oder zumindest einer seiner Komponenten erfolgt.

8. Verfahren nach einem der vorangehenden Ansprüche, **dadurch gekennzeichnet, dass** die Leistung der wenigstens einen blauen LED (1) und/oder der wenigstens einen ultravioletten oder UV-nahen LED (2) mit einer programmierten Pulsweitenmodulation gesteuert wird.

9. Verfahren nach einem der vorangehenden Ansprüche, **dadurch gekennzeichnet, dass** die Leistung der wenigstens einen blauen LED (1) und die Leistung der wenigstens einen ultravioletten oder UV-nahen LED (2) in Abhängigkeit von der Zeit derart programmiert gesteuert werden, dass der Betrieb der wenigstens einen blauen LED (1) zuerst beginnt und der Betrieb der wenigstens einen ultravioletten oder UV-nahen LED (2) danach beginnt und der Betrieb der wenigstens einen blauen LED (1) vor oder gleichzeitig mit dem Betrieb der wenigstens einen ultravioletten oder UV-nahen LED (2) beendet wird.

10. Verfahren nach einem der vorangehenden Ansprüche, **dadurch gekennzeichnet, dass** die Lichtbestrahlungsvorrichtung zumindest einen Lüfter (3, 4) zur Luft-Kühlung der LED (1, 2) aufweist, vorzugsweise einen Lüfter (3) zur Luft-Kühlung der wenigstens einen blauen LED (1) aufweist und einen Lüfter (4) zur Luft-Kühlung der wenigstens einen ultravioletten oder UV-nahen LED (2) aufweist, wobei der zumindest eine Lüfter (3, 4) von zumindest einem Motor angetrieben wird, der analog zur Steuerung der Leistung der wenigstens einen blauen LED (1) und/oder der wenigstens einen ultravioletten oder UV-nahen LED (2) programmiert gesteuert wird.

11. Verfahren nach einem der vorangehenden Ansprüche, **dadurch gekennzeichnet, dass** die Lichtbestrahlungsvorrichtung einen Motor (16) zum Drehen eines Drehtellers (14) aufweist, wobei der Drehteller (14) im Abstrahlungsbereich der Lichtbestrahlungsvorrichtung angeordnet ist und das Dentalpolymerisationskompositharz (11) auf dem Drehteller (14) angeordnet wird, um es auszuhärten, und wobei vorzugsweise der Motor (16) zum Drehen eines Drehtellers (14) programmiert gesteuert wird.

12. Verfahren nach einem der vorangehenden Ansprüche, **dadurch gekennzeichnet, dass** bei der programmierten Steuerung der Leistung der wenigstens einen blauen LED (1) und/oder der wenigstens einen ultravioletten oder UV-nahen LED (2) zumindest zwei unterschiedliche Sollleistungen größer als 0 Watt eingestellt werden.

13. Verfahren nach Anspruch 12, **dadurch gekennzeichnet, dass**
die zumindest zwei Sollleistungen wenigstens eine Sekunde gehalten werden, besonders bevorzugt zwischen einer und 300 Sekunden beziehungsweise maximal bis Programmende gehalten werden.

14. Verfahren nach einem der vorangehenden Ansprüche, **dadurch gekennzeichnet, dass** zumindest ein Teil des Lichts der wenigstens einen blauen LED (1) und/oder der wenigstens einen ultravioletten oder UV-nahen LED (2), das nicht direkt auf das Dentalpolymerisationskompositharz (11) trifft mit Hilfe von einem Reflektor oder mit Hilfe einer Mehrzahl von Reflektoren auf das Dentalpolymerisationskompositharz (11) gestrahlt wird.

15. Verfahren nach einem der vorangehenden Ansprüche, **dadurch gekennzeichnet, dass** die Lichtbestrahlungsvorrichtung eine Abstrahlöffnung zum Abstrahlen des Lichts der wenigstens einen blauen LED (1) und der wenigstens einen ultravioletten oder UV-nahen LED (2) mit einer Fläche von wenigstens 10 cm², vorzugsweise 100 cm² aufweist.

16. Verfahren nach einem der vorangehenden Ansprüche, **dadurch gekennzeichnet, dass** das Dentalpolymerisationskompositharz (11) auf einem Trägerelement angeordnet wird und das auf dem Trägerelement befindliche Dentalpolymerisationskompositharz (11) mit der Lichtbestrahlungsvorrichtung bestrahlt wird, wobei vorzugsweise als Trägerelement ein Dentalmodell oder ein Gerüst verwendet wird.

17. Verfahren nach einem der vorangehenden Ansprüche, **dadurch gekennzeichnet, dass** zuerst die wenigstens eine blaue LED (1) ohne die wenigstens eine ultraviolette oder UV-nahe LED (2) betrieben wird und später die wenigstens eine ultraviolette oder UV-nahe LED (2) zugeschaltet wird, so dass die wenigstens eine blaue LED (1) und die wenigstens eine ultraviolette oder UV-nahe LED (2) ab einem späteren Zeitpunkt zumindest zeitweise gleichzeitig betrieben werden.

18. Lichtbestrahlungsvorrichtung zur Polymerisation und Härtung eines Dentalpolymerisationskompositharzes (11), die Lichtbestrahlungsvorrichtung aufweisend wenigstens eine blaue LED (1) mit einem Emissionspeak bei einer Wellenlänge zwischen 430 nm und 490 nm und wenigstens eine ultraviolette oder UV-nahen LED (2) mit einem Emissionspeak zwischen 350 nm und 420 nm und eine Steuerung (6) zur zeitlichen Leistungssteuerung der wenigstens einen blauen LED (1) und zur zeitlichen Leistungssteuerung der wenigstens einen ultravioletten oder UV-nahen LED (2) unabhängig voneinander, wobei die Steuerung (6) zur Umsetzung eines Verfahrens nach einem der vorangehenden Ansprüche eingerichtet ist, insbesondere programmiert ist.

19. Lichtbestrahlungsvorrichtung nach Anspruch 18, **dadurch gekennzeichnet, dass**
die Lichtbestrahlungsvorrichtung zumindest zwei blaue LED (1) mit einem Emissionspeak bei einer Wellenlänge zwischen 430 nm und 490 nm aufweist und die Lichtbestrahlungsvorrichtung wenigstens doppelt so viele der zumindest zwei blauen LED (1) wie der wenigstens einen ultravioletten oder UV-nahen LED (2) aufweist, bevorzugt wenigstens viermal so viele der wenigstens einen blauen LED (1) wie der wenigstens einen ultravioletten oder UV-nahen LED (2) aufweist.

20. Lichtbestrahlungsvorrichtung nach Anspruch 18 oder 19, **dadurch gekennzeichnet, dass**
die wenigstens eine blaue LED (1) als mehrere Gruppen von zwei bis zwanzig in Reihe geschalteten blauen LED (1) aufgebaut sind und die wenigstens eine ultraviolette oder UV-nahe LED (2) als zumindest eine Gruppe von zwei bis zwanzig in Reihe geschalteten ultravioletten oder UV-nahe LED (2) aufgebaut sind.

## Claims

1. A method for polymerizing and curing a dental polymerization composite resin (11) using a light irradiating device, said light irradiating device comprising at least one blue LED (1) with an emission peak at a wavelength between 430 nm and 490 nm and at least one ultraviolet or near-UV LED (2) with an emission peak between 350 nm and 420 nm, **characterized in that**
the at least one blue LED (1) is first operated without the at least one ultraviolet or near-UV LED (2), and the at least one ultraviolet or near-UV LED (2) is switched on and operated later, so that the at least one blue LED and the at least one ultraviolet or near-UV LED are operated at the same time at least at times as of a later point in time, wherein the power of the at least one blue LED (1) and the power of the at least one ultraviolet or near-UV LED (2) are controlled in a programmed manner based on time, and the light irradiated from the at least one blue LED (1) and the at least one ultraviolet or near-UV LED (2) of the light irradiating device is irradiated onto the dental polymerization composite resin (11), wherein the dental polymerization composite resin (11) is thereby polymerized and cured.

2. The method according to Claim 1, **characterized in that**
the programmed controller produces a software-modulated and/or a hardware-modulated power control of the at least one blue LED (1) and/or of the at least one ultraviolet or near-UV LED (2).

3. The method according to Claim 1 or 2, **characterized in that**
the at least one blue LED (1) and/or the at least one ultraviolet or near-UV LED (2) is/are operated periodically at least at times, wherein the frequency is preferably controlled in a programmed manner.

4. The method according to any one of the preceding claims, **characterized in that**
the power of the at least one blue LED (1) and/or of the at least one ultraviolet or near-UV LED (2) is increased and/or reduced in a controlled manner based on time by means of at least one power ramp, wherein the power is preferably increased or reduced within a period of at least 1 second and a maximum of 300 seconds from a first power to a second power and/or the at least one power ramp is controlled with a linear, logarithmic or exponential time-dependent course or with a passage of time which follows another mathematical function.

5. The method according to any one of the preceding claims, **characterized in that** the program for temporally controlling the power of the at least one blue LED (1) and/or of the at least one ultraviolet or near-UV LED (2) is started by operating an operating element (12) of the light irradiating device or of an input device or of a computer (12) which is connected to the light irradiating device or which is a part of the light irradiating device, in particular started by operating a switch, a button, a rotary pulse generator, a keyboard, a voice control, a touchscreen or a lever of the light irradiating device or of the computer (12).

6. The method according to any one of the preceding claims, **characterized in that**, in order to polymerize and cure the dental polymerization composite resin (11), a camphorquinone and a tertiary amine or an acylphosphine oxide or diphenyl-2,4,6-trimethylbenzoyl-phosphine-oxide (TPO) or 1-phenylpropane-1,2-dione (PPD) is used as the photopolymerization catalyst of the dental polymerization composite resin (11).

7. The method according to any one of the preceding claims, **characterized in that**
a plurality of different programs for temporally controlling the power of the at least one blue LED (1) and of the at least one ultraviolet or near-UV LED (2) are deposited or stored in the light irradiating device and a program is selected by an input, by operating an operating element (12), by scanning a code or a label and/or by means of a measurement with at least one sensor, wherein the measurement is preferably effected with at least one sensor by means of an analysis of the dental polymerization composite resin (11) or of at least one of its components.

8. The method according to any one of the preceding claims, **characterized in that**
the power of the at least one blue LED (1) and/or of the at least one ultraviolet or near-UV LED (2) is controlled with a programmed pulse width modulation.

9. The method according to any one of the preceding claims, **characterized in that**
the power of the at least one blue LED (1) and the power of the at least one ultraviolet or near-UV LED (2) are controlled in a programmed manner based on time in such a manner that the operation of the at least one blue LED (1) starts first and the operation of the at least one ultraviolet or near-UV LED (2) starts thereafter and the operation of the at least one blue LED (1) is ended prior to or at the same time as the operation of the at least one ultraviolet or near-UV LED (2).

10. The method according to any one of the preceding claims, **characterized in that**
the light irradiating device has at least one fan (3, 4) for air cooling of the LED (1, 2), preferably has one fan (3) for air cooling of the at least one blue LED (1), and has a fan (4) for air cooling of the at least one ultraviolet or near-UV LED (2), wherein the at least one fan (3, 4) is driven by at least one motor which is controlled in a programmed manner similarly to the controller of the power of the at least one blue LED (1) and/or of the at least one ultraviolet or near-UV LED (2).

11. The method according to any one of the preceding claims, **characterized in that**
the light irradiating device has a motor (16) for rotating a rotary plate (14), wherein the rotary plate (14) is arranged in the irradiation region of the light irradiating device and the dental polymerization composite resin (11) is arranged on the rotary plate (14) in order to cure it, and wherein the motor (16) for rotating a rotary plate (14) is preferably controlled in a programmed manner.

12. The method according to any one of the preceding claims, **characterized in that**
at least two different nominal powers greater than 0 Watt are adjusted during the programmed control of the power of the at least one blue LED (1) and/or of the at least one ultraviolet or near-UV LED (2).

13. The method according to claim 12, **characterized in that**
the at least two different nominal powers are held for at least a second, particular preferably between one and 300 seconds or held up to the maximum end of the program respectively.

14. The method according to any one of the preceding claims, **characterized in that**
at least a part of the light of the at least one blue LED (1) and/or of the at least one ultraviolet or near-UV LED (2) which does not directly hit the dental polymerization composite resin (11) is irradiated with the aid of a reflector or with the aid of a plurality of reflectors onto the dental polymerization composite resin (11).

15. The method according to any one of the preceding claims, **characterized in that**
the light irradiating device has an irradiation opening for irradiating the light of the at least one blue LED (1) and of the at least one ultraviolet or near-UV LED (2) having an area of at least 10 cm², preferably 100 cm².

16. The method according to any one of the preceding claims, **characterized in that**
the dental polymerization composite resin (11) is arranged on a carrier element and the dental polymerization composite resin (11) located on the carrier element is irradiated with the light irradiating device, wherein a dental model or a framework is preferably used as the carrier model.

17. The method according to any one of the preceding claims, **characterized in that**
the at least one blue LED (1) is first operated without the at least one ultraviolet or near-UV LED (2) and the at least one ultraviolet or near-UV LED (2) is switched on later, so that the at least one blue LED (1) and the at least one ultraviolet or near-UV LED (2) are operated at the same time at least at times as of a later point in time.

18. A light irradiating device for polymerizing and curing a dental polymerization composite resin (11), said light irradiating device having at least one blue LED (1) with an emission peak at a wavelength between 430 nm and 490 nm and at least one ultraviolet or near-UV LED (2) with an emission peak between 350 nm and 420 nm, and a controller (6) for temporally controlling the power of the at least one blue LED (1) and for temporally controlling the power of the at least one ultraviolet or near-UV LED (2) independently of each other, wherein the controller (6) is arranged, in particular programmed, to carry out a method according to any one of the preceding claims.

19. The light irradiating device according to Claim 18, **characterized in that**
the light irradiating device has at least two blue LEDs (1) with an emission peak at a wavelength between 430 nm and 490 nm and the light irradiating device has at least twice as many of the at least two blue LEDs (1) as the at least one ultraviolet or near-UV LED (2), preferably has at least four times as many of the at least one blue LED (1) as the at least one ultraviolet or near-UV LED (2).

20. The light irradiating device according to Claim 18 or 19, **characterized in that**
the at least one blue LED (1) is constructed as multiple groups of two to twenty series-connected blue LEDs (1) and the at least one ultraviolet or near-UV LED (2) is constructed as at least one group of two to twenty series-connected ultraviolet or near-UV LEDs (2).

## Revendications

1. Procédé de polymérisation et de durcissement d'une résine de polymérisation composite dentaire (11) avec un dispositif d'irradiation de lumière, le dispositif d'irradiation de lumière comprenant au moins une DEL bleue (1) avec un pic d'émission à une longueur d'onde entre 430 nm et 490 nm et au moins une DEL ultraviolette ou UV proche (2) avec un pic d'émission entre 350 nm et 420 nm, **caractérisé en ce que**,
tout d'abord, l'au moins une DEL bleue (1) est activée sans l'au moins une DEL ultraviolette ou UV proche (2), et plus tard l'au moins une DEL ultraviolette ou UV proche est ajoutée dans le circuit et activée de sorte que l'au moins une DEL bleue (1) et l'au moins une DEL ultraviolette ou UV proche (2) sont activées au moins par moments simultanément à partir d'un instant ultérieur, et la puissance de l'au moins une DEL bleue (1) et la puissance de l'au moins une DEL ultraviolette ou UV proche (2) sont commandées programmées en fonction du temps, et ainsi la lumière émise par l'au moins une DEL bleue (1) et l'au moins une DEL ultraviolette ou UV proche (2) rayonne sur la résine de polymérisation composite dentaire (11), où la résine de polymérisation composite dentaire (11) est de ce fait polymérisée et durcit.

2. Procédé selon la revendication 1, **caractérisé en ce que**
la commande programmée provoque une commande de puissance modulée par logiciel et/ou modulée par matériel de l'au moins une DEL bleue (1) et/ou de l'au moins une DEL ultraviolette ou UV proche (2).

3. Procédé selon la revendication 1 ou la revendication 2, **caractérisé en ce que**
l'au moins une DEL bleue (1) et/ou l'au moins une DEL ultraviolette ou UV proche (2) sont activées périodiquement au moins par moments, où de préférence, la fréquence est commandée de manière programmée.

4. Procédé selon l'une des revendications précédentes, **caractérisé en ce que**
la puissance de l'au moins une DEL bleue (1) et/ou de l'au moins une DEL ultraviolette ou UV proche (2) est commandée vers des valeurs plus élevées et/ou des valeurs plus faibles en fonction du temps par le biais d'au moins une rampe de puissance, où, de préférence, la puissance est augmentée ou réduite pendant un intervalle de temps d'au moins 1 seconde et d'au maximum 300 secondes en partant d'une première puissance vers une deuxième puissance, et/ou l'au moins une rampe de puissance est commandée avec une évolution dans le temps linéaire, logarithmique ou exponentielle ou avec une évolution dans le temps qui suit une autre fonction mathématique.

5. Procédé selon l'une des revendications précédentes, **caractérisé en ce que**
le programme pour la commande dans le temps de la puissance de l'au moins une DEL bleue (1) et/ou de l'au moins une DEL ultraviolette ou UV proche (2) est démarré par l'actionnement d'un élément d'actionnement (12) du dispositif d'irradiation de lumière ou d'une unité de saisie ou d'un ordinateur (12), qui est relié(e) avec le dispositif d'irradiation de lumière, ou qui constitue une partie du dispositif d'irradiation de lumière, notamment, est démarré par l'actionnement d'un commutateur, d'un bouton, d'un transmetteur de vitesse, d'un clavier, d'une commande vocale, d'un écran tactile ou d'un levier du dispositif d'irradiation de lumière ou de l'ordinateur (12).

6. Procédé selon l'une des revendications précédentes, **caractérisé en ce que**,
pour la polymérisation et le durcissement de la résine de polymérisation composite dentaire (11), une camphorquinone et une amine tertiaire ou un phosphine oxyde d'acyle ou du diphényl-2,4,6-triméthyl benzoyl phosphine oxyde (TPO) ou de la phényl propane-1,2-dione (PPD) sont employées en tant que catalyseur de photopolymérisation de la résine de polymérisation composite dentaire (11).

7. Procédé selon l'une des revendications précédentes, **caractérisé en ce**
**qu'**une multiplicité de programmes différents est enregistrée ou est stockée pour la commande de puissance en fonction du temps de l'au moins une DEL bleue (1) et de l'au moins une DEL ultraviolette ou UV proche (2) dans le dispositif d'irradiation de lumière et qu'il y a une sélection d'un programme par une saisie, par un actionnement d'un élément d'actionnement (12), par un balayage d'un code ou d'une étiquette, et/ou par une mesure avec au moins un capteur, où, de préférence, la mesure a lieu avec au moins un capteur par une analyse de la résine de polymérisation composite dentaire (11) ou d'au moins un de ses composants.

8. Procédé selon l'une des revendications précédentes, **caractérisé en ce que**
la puissance de l'au moins une DEL bleue (1), et/ou de l'au moins une DEL ultraviolette ou UV proche (2) est commandée avec une modulation de largeur d'impulsion programmée.

9. Procédé selon l'une des revendications précédentes, **caractérisé en ce que**
la puissance de l'au moins une DEL bleue (1) et la puissance de l'au moins une DEL ultraviolette ou UV proche (2) sont commandées programmées en fonction du temps de telle manière que le fonctionnement de l'au moins une DEL bleue (1) commence en premier lieu et le fonctionnement de l'au moins une DEL ultraviolette ou UV proche (2) commence après, et le fonctionnement de l'au moins une DEL bleue (1) est terminé avant ou en même temps que le fonctionnement de l'au moins une DEL ultraviolette ou UV proche (2).

10. Procédé selon l'une des revendications précédentes, **caractérisé en ce que**
le dispositif d'irradiation de lumière présente au moins un aérateur (3, 4) pour le refroidissement par l'air des DEL (1, 2), de préférence, un aérateur (3) pour le refroidissement par l'air de l'au moins une DEL bleue (1) et un aérateur (4) pour le refroidissement par l'air de l'au moins une DEL ultraviolette ou UV proche (2), où l'au moins un aérateur (3, 4) est entraîné par au moins un moteur qui est commandé programmé de manière analogique pour la commande de la puissance de l'au moins une DEL bleue (1) et/ou de l'au moins une DEL ultraviolette ou UV proche (2).

11. Procédé selon l'une des revendications précédentes, **caractérisé en ce que**
le dispositif d'irradiation de lumière présente un moteur (16) pour la mise en rotation d'un plateau tournant (14), où le plateau tournant (14) est disposé dans la plage d'irradiation du dispositif d'irradiation de lumière et la résine de polymérisation composite dentaire (11) est disposée sur le plateau tournant (14), afin de la durcir et où, de préférence, le moteur (16) permettant la mise en rotation du plateau tournant (14) est commandé de manière programmée.

12. Procédé selon l'une des revendications précédentes, **caractérisé en ce que**,
lors de la commande programmée de la puissance de l'au moins une DEL bleue (1) et/ou de l'au moins une DEL ultraviolette ou UV proche (2), au moins deux puissances souhaitées différentes sont réglées supérieures à 0 Watt.

13. Procédé selon la revendication 12, **caractérisé en ce que**
les au moins deux puissances souhaitées sont maintenus au moins une seconde, de manière particulièrement préférée, entre une et 300 secondes, respectivement au maximum jusqu'à la fin du programme.

14. Procédé selon l'une des revendications précédentes, **caractérisé en ce qu'**au moins une partie de la lumière de l'au moins une DEL bleue (1) et/ou de l'au moins une DEL ultraviolette ou UV proche (2), qui ne tombe pas directement sur la résine de polymérisation composite dentaire (11), est irradiée à l'aide d'un réflecteur ou à l'aide d'une multiplicité de réflecteurs sur la résine de polymérisation composite dentaire (11).

15. Procédé selon l'une des revendications précédentes, **caractérisé en ce que**
le dispositif d'irradiation de lumière présente un orifice d"émission permettant l'émission de la lumière de l'au moins une DEL bleue (1) et de l'au moins une DEL ultraviolette ou UV proche (2) avec une surface d'au moins 10 cm², de préférence de 100 cm².

16. Procédé selon l'une des revendications précédentes, **caractérisé en ce que**
la résine de polymérisation composite dentaire (11) est disposée sur un élément support et la résine de polymérisation composite dentaire (11) se trouvant sur l'élément support est irradiée avec le dispositif d'irradiation de lumière, où on emploie de préférence un modèle dentaire ou un échafaudage en tant qu'élément support.

17. Procédé selon l'une des revendications précédentes, **caractérisé en ce que**
tout d'abord, l'au moins une DEL bleue (1) est mise en fonctionnement sans l'au moins une DEL ultraviolette ou UV proche (2), et plus tard l'au moins une DEL ultraviolette ou UV proche (2) est ajoutée dans le circuit de sorte que l'au moins une DEL bleue (1) et l'au moins une DEL ultraviolette ou UV proche (2) sont mises en fonctionnement simultanément au moins par moments après un instant ultérieur.

18. Dispositif d'irradiation de lumière permettant la polymérisation et le durcissement d'une résine de polymérisation composite dentaire (11), le dispositif d'irradiation de lumière présentant au moins une DEL bleue (1) avec un pic d'émission à une longueur d'onde entre 430 nm et 490 nm et au moins une DEL ultraviolette ou UV proche (2) avec un pic d'émission entre 350 nm et 420 nm, et une commande (6) permettant la commande de la puissance de l'au moins une DEL bleue (1) et la commande de la puissance dans le temps de l'au moins une DEL ultraviolette ou UV proche (2) de manière indépendante l'une par rapport à l'autre, où la commande (6) est conçue, notamment, programmée, pour la réalisation d'un procédé selon l'une des revendications précédentes.

19. Dispositif d'irradiation de lumière selon la revendication 18, **caractérisé en ce que**
le dispositif d'irradiation de lumière présente au moins deux DEL bleues (1) avec un pic d'émission à une longueur d'onde entre 430 nm et 490 nm, et le dispositif d'irradiation de lumière présente au moins deux fois le nombre d'au moins deux DEL bleues (1) que l'au moins une DEL ultraviolette ou UV proche (2), de préférence au moins quatre fois le nombre des au moins une DEL bleue (1) que l'au moins une DEL ultraviolette ou UV proche (2) ne présente.

20. Dispositif d'irradiation de lumière selon la revendication 18 ou la revendication 19, **caractérisé en ce que**
l'au moins une DEL bleue (1) est montée sous forme de plusieurs groupes de deux à vingt DEL bleues (1) branchées en série et l'au moins une DEL ultraviolette ou UV proche (2) est montée sous forme d'au moins un groupe de deux à vingt DEL ultraviolettes ou UV proche (2) branchées en série.
